# EUROPÄISCHE PATENTSCHRIFT

(11) **EP 0 640 674 B1**
(45) Veröffentlichungstag und Bekanntmachung des Hinweises auf die Patenterteilung: **13.11.2002**
(21) Anmeldenummer: 94112970.2
(22) Anmeldetag: 19.08.1994
(51) Int. Cl.: C09J 11/02, C09J 125/08, C09J 133/08

(54) **Wässriger Dispersionskleber**
Aqueous dispersion adhesive
Colle à dispersion aqueuse

(30) Priorität: 28.08.1993 DE 4329001; 29.01.1994 DE 4402688
(43) Veröffentlichungstag der Anmeldung: 01.03.1995
(73) Patentinhaber: Depron B.V., 6002 SM Weert (NL)
(72) Erfinder: Vonken, Hub A. G., NL-6006 CW Weert (NL); Bogers, Jack J., NL-6023 AN Budel-Schoot (NL)
(74) Vertreter: Zounek, Nikolai, Dipl.-Ing.

(56) Entgegenhaltungen:
- EP-A- 0 349 320
- DE-A- 3 904 972

## Beschreibung

Die Erfindung betrifft einen wäßrigen Dispersionskleber aus einer Co- oder Terpolymerisat-Dispersion und einem Anteil an Flammschutzmittel auf der Basis von Bor- und/oder Aluminiumverbindungen.

Ein Produkt als haftvermittelnde Oberflächenschicht mit einem derartigen Kleber ist aus dem Dokument EP-B 0 109 663 bekannt, in dem eine schwer entflammbare Untertapete aus Polystyrol-Hartschaum beschrieben ist, die auf mindestens einer ihrer Oberflächen eine Beschichtung zur Verbesserung der Haftung zwischen Untertapete und brennbarer Tapete aufweist. Diese Beschichtung enthält einen flammhemmenden Zusatz und den Kleber aus einem Copolymer oder Terpolymer mit überwiegenden Vinylacetat-Einheiten. Der flammhemmende Zusatz besteht aus einer nicht brennbaren anorganischen Verbindung auf Basis von Aluminium und Bor. Das Gewichtsverhältnis von Kleber zu flammhemmendem Zusatz beträgt 1:3 bis 1:8. Die Beschichtung besitzt ein Flächengewicht von 100 bis 400 g/m², insbesondere von 200 bis 300 g/m² im trockenen Zustand. Der flammhemmende Zusatz ist eine Mischung von Aluminiumhydroxid und Zinkborat im Gewichtsverhältnis von 1:1 bis 7:1, insbesondere 2:1 bis 5:1. Der Kleber kann auch ein Terpolymer mit überwiegenden Vinylacetat-Einheiten sowie Ethylen- und Vinylchlorid-Einheiten sein.

Untertapeten aus Polystyrol-Hartschaum sind beispielsweise in der EP-A - 0036 156 und dem DE-U 79 31 745 beschrieben.

Wandverkleidungsplatten oder -folien aus Polystyrol-Hartschaum sind allgemein bekannt und dienen als sogenannte Untertapeten zum Verkleiden von Wänden vor dem Aufkleben einer Tapete. Neben Platten in gefalteter oder ungefalteter Form werden auch Folienrollen eingesetzt. Mit derartigen Platten oder Folien können beispielsweise Mauerrisse verkleidet, eine gewisse Wärmedämmung erzielt und die Schwitzwasserbildung verhindert werden.

Aus der EP-A - 0 036 156 ist es auch bekannt, zum Verkleben von Tapeten auf geschäumten Polystyrolbelägen einen Klebstoff zu verwenden, der eine an sich bekannte klebende Komponente enthält und zusätzlich, bezogen auf seinen klebenden Anteil, 20 bis 80 Gew.% eines flammhemmenden Mittels aufweist. Geeignete flammhemmende Mittel sind Verbindungen auf der Basis von Ammoniumphosphat und Ammoniumsulfamat.

Die DE-U 79 31 745 gibt die Lehre, nicht den Klebstoff, sondern die auf der Untertapete aus Polystyrol-Hartschaum aufgebrachte haftvermittelnde Oberflächenschicht mit einem Flammschutzmittel zu versehen. Die mit einem Kleister versehene Tapete wird dann über diese haftvermittelnde Schicht mit der Untertapete verbunden. Nach dieser Druckschrift werden die Platten bei ihrer Herstellung mit einer wäßrigen Dispersion in der Art gefüllter Dispersionsklebstoffe beschichtet und anschließend in einem Heizkanal getrocknet. Die haftvermittelnde Schicht hat die Aufgabe, die Haftfestigkeit zwischen der Untertapete und der mit Kleister versehenen Tapete zu erhöhen. Die haftvermittelnde Oberflächenschicht der Untertapete kann gleichfalls einen flammhemmenden Zusatz aufweisen, jedoch sind über Art und Menge dieses Flammschutzmittels sowie über das Auftragsverfahren keine Angaben gemacht.

Aus der DE-A 22 44 775 ist es außerdem bekannt, Klebstoffzusammensetzungen auf der Basis von Vinylacetatethylencopolymer-Emulsion bei der Verstärkung von Teppichen einzusetzen, die zur Reduzierung der Flammbarkeit geeignetes Füllmaterial, wie Aluminiumoxidtrihydrat, enthalten.

Bei dem aus der EP-B 0 109 663 bekannten Beschichtungskleber ist von Nachteil, daß er nur als haftvermittelnde Oberflächenschicht für Hart-Polystyrolschaum für Innenanwendungen einsetzbar ist und daß er nach einer Lagerung von einigen Wochen nicht mehr verarbeitbar ist.

Ausgehend von diesem Stand der Technik stellt sich somit die Aufgabe, einen Dispersionskleber zu entwickeln, der über Monate hinweg verarbeitbar bleibt und der gute Haftungseigenschaften einer Vielzahl von unterschiedlichen Materialien gegenüber dem jeweiligen Untergrund, mit dem diese Materialien verklebt werden, sicherstellt, bei gleichzeitig geringer Entflammbarkeit des Verbundes aus Untergrund und aufgeklebtem Material.

Gelöst wird diese Aufgabe durch den eingangs beschriebenen Dispersionskleber in der Weise, daß der Feststoffanteil an Flammschutzmittel 40 bis 75 Gew%, Feststoffzusätze aus einem Verarbeitungs- und Verdickungsmittel 0,3 bis 0,8 Gew% sowie einem Netzmittel 0,1 bis 0,26 Gew% und einem Suspensionsmittel 0,03 bis 0,09 Gew.%, jeweils bezogen auf das Gesamtgewicht des Dispersionsklebers, betragen.

Der Dispersionskleber wird u.a. als Hartschaumkleber für Polystyrolschaumfolien, -platten, -formkörper verwendet. Das Polystyrol liegt beispielsweise in Form von bahnförmigen Folien oder rechteckigen Platten vor. Solche Platten bestehen aus extrudiertem Polystyrol-Hartschaum oder Partikelschaum, und die Verfahren zur Herstellung solcher Platten oder Folien bzw. der Materialien selbst, sind aus den in der EP-A 0 036 156 zitierten Literaturstellen bekannt.

Gegenüber dem aus der EP-B 0 109 663 bekannten Haftvermittler besitzt der erfindungsgemäße Dispersionskleber einen höheren Netzmittelanteil, enthält ein Suspensionsmittel und ist der Anteil des Verarbeitungs- und Verdickungsmittels erheblich erhöht. Dabei liegt die Menge an Verdickungsmittel als 33%ig reiner Stoff vor, während im Dispersionskleber nach der EP-B - 0 109 663 das Verdickungsmittel in einer 3%igen wäßrigen Lösung eingesetzt wird.

Durch die positive Interaktion dieser drei Komponenten werden die Anfangsklebekraft und die Verarbeitbarkeit des Dispersionsklebers erheblich erhöht und über längere Zeitspannen von mehreren Monaten gesichert.

In Weiterbildung der Erfindung enthält die Dispersion ein Co- oder Terpolymer mit überwiegenden Vinylacetat-Einheiten. Des weiteren enthält die Dispersion ein Copolymerisat aus einem Acrylsäureester und Styrol.

In Ausgestaltung der Erfindung enthält der Dispersionskleber 15 bis 50 Gew.%, insbesondere 20 bis 30 Gew.% der co- oder terpolymeren Dispersion, 40 bis 75 Gew.% Plammschutzmittel und 5 bis 20 Gew.% an Zusätzen aus Verdickungs-, Netz-, Suspensions-, Konservierungsmittel, Entschäumer, Trocknungsverzögerer und Mittel zum Herabsetzen der Filmbildungstemperatur.

Dabei beträgt das Gewichtsverhältnis von co- oder terpolymerer Dispersion zu Flammschutzmittel 1:5 bis kleiner 1:0,8, insbesondere 1:2,5 bis 1:2.

Das Verdickungs- und Verarbeitungsmittel ist bevorzugt Methyl- oder Hydroxyethylcellulose.

In Ausgestaltung der Erfindung enthält der Dispersionskleber 10 bis 50 Gew.%, insbesondere 20 Gew.% der Copolymerisat-Dispersion, 30 bis 62 Gew.% Flammschutzmtitel und 15 bis 21 Gew.% an Zusätzen aus Verdickungs-, Netz-, Suspensions-, Dispergier-, Konservierungsmittel und Entschäumer.

Dabei beträgt das Gewichtsverhältnis von wäßriger Copolymerisat-Dispersion zu Flammschutzmittel 0,16:1 bis 1,67:1.

Zur Bestimmung der Gewichtsverhältnisse werden die Anteile in Gewichtsprozent der co- oder terpolymeren Dispersion bzw. der wäßrigen Copolymerisat-Dispersion und des Flammschutzmittels mit den Grenzwerten der angegebenen Gewichtsbereiche zueinander in Beziehung gesetzt.

Der Dispersionskleber umfaßt ein Co- oder Terpolymer mit überwiegenden Vinylacrylat-Einheiten, insbesondere wird ein Vinylacrylat/Ethylen/Vinylchlorid-Terpolymer verwendet (z.B. Vinnapas LT 500, Hersteller: Wacker-Chemie, Deutschland), das als wäßrige 50 Gew.%-ige Dispersion eingesetzt wird. Das Terpolymer des Dispersionsklebers kann auch ein Terpolymer aus Vinylacetat-, Ethylen- und Vinylchlorid-Einheiten sein, wie beispielsweise Mowilith® DM 120 bzw. Mowilith® DM 122, (Hersteller: Hoechst AG). Das Flammschutzmittel besteht aus nicht brennbaren anorganischen Verbindungen auf der Basis von Aluminium oder Bor und Aluminium, wie sie aus dem Stand der Technik bekannt sind. Zu diesen Verbindungen zählen u. a. Borsäure oder deren Salze und Aluminiumhydroxid. Bevorzugt wird Aluminiumhydroxid allein als Flammschutzmittel mit 60 Gew.%, bezogen auf das Gesamtgewicht des Dispersionsklebers, eingesetzt. Ebenso umfaßt das Flammschutzmittel eine Mischung aus Alumniniumhydroxid und Zinkborat im Gewichtsverhältnis 3:1 bis 8:1.

Die weitere Ausgestaltung der Erfindung ergibt sich aus den Merkmalen der Ansprüche 13 bis 20.

Wie schon in dem Dokument EP-B 0 109 663 zu diesem Gewichtsverhältnis zwischen Aluminiumhydroxid und Zinkborat ausgeführt ist, zeigen diese Flammschutzmittel gegenüber anderen Flammschutzmitteln eine wesentlich geringere Entwicklung von Rauchgasen und bewirken eine deutlich verringerte Entflammbarkeit des Verbundes aus Polystyrolschaum und Untergrund. Darüber hinaus wird auch die haftvermittelnde Wirkung des Kleberrohstoffes überraschenderweise verbessert, was nicht vorhersehbar war. Der Dispersionskleber erreicht bei mehreren Verbrennungsversuchen die Klassifizierung B1 (schwer entflammbar) nach DIN 4102.

Mit dem Dispersionskleber, der gewissermaßen ein Universalkleber ist, können nicht nur Kunststoffschäume mit einem entsprechenden Untergrund verklebt werden, sondern darüber hinaus auch Glasfasertapeten und Gewebe/Textilien/Cellulosetapeten, Polyestertapeten, Gipsfaserplatten, Spanplatten, Fliesen, Zementplatten, Gipskarton, Holz oder Kork. Dabei ist nur wesentlich, daß eine der zu verklebenden Flächen porös oder saugfähig für Flüssigkeiten, insbesondere Wasser, ist.

Das Auftragen des Dispersionsklebers erfolgt im allgemeinen aufgrund seiner hohen Viskosität mit einer Zahnspachtel oder mit einem Rakel. Es können u.U. auch andere Auftragsverfahren, wie z.B. Walzenauftrag, Gießverfahren mit und ohne Druck, angewendet werden. Die Auftragsmenge der Beschichtung wird so eingestellt, daß das Flächengewicht 300 bis 800 g/m² im feuchten Zustand beträgt.

Die einzelnen Bestandteile liegen beim Auftrag in wäßriger Dispersion vor, der noch zusätzlich geringe Mengen von Verarbeitungs- bzw. Verdickungsmitteln, wie Methyl- und Hydroxyethylcellulose sowie dispersionsstabilisierende und filmbildende Hilfsmittel, zugesetzt werden. So werden noch Netzmittel, wie Natriumpolyphosphat, Suspensionsmittel, wie Ammoniumpolyacrylat, Konservierungsmittel, Entschäumer, ein Netz- und Dispergiermittel, wie ein Ammoniumsalze einer Polyacrylsäure, und ein die Filmbildungstemperatur herabsetzendes Mittel, wie Diethylenglykolmonobutyletheracetat, und ein Trocknungsverzögerer, wie 2-(2-Butoxyethoxy)ethanol zugesetzt, zweckmäßigerweise in einer Gesamtmenge von bis zu 3,0 bis 4,0 Gew.%, bezogen auf das Gesamtgewicht der Dispersion.

Zwei Beispiele bevorzugter Zusammensetzungen des erfindungsgemäßen, wäßrigen Dispersionsklebers sind folgende:

### Beispiel 1

| | |
|---|---|
| 20-40 | Gew.% einer 50%igen wäßrigen Klebrohstoff-Dispersion aus Vinylacrylat- oder Vinylacetat-Ethylenvinylchlorid-Terpolymer, |
| 0,6-0,8 | Gewichtsteile eines Verdickungs- und Verarbeitungsmittels, wie Hydroxyethylcellulose, |
| 0,6-0,8 | Gew.% einer 33-gewichtsprozentigen wäßrigen Natriumpolyphosphat-Lösung (Netzmittel), |
| 0,2-0,3 | Gew.% einer 30-gewichtsprozentigen wäßrigen Ammoniumpolyacrylat-Lösung (Suspensionsmittel) |
| 0,1-0,2 | Gew.% Konservierungsmittel, wie Alkylammonium, Isothiazolene, Formolderivate, |
| 0,7-0,8 | Gew.% Entschäumer, wie hydrophobe Kieselsäure, |
| 0,9-1,0 | Gew.% eines Mittels zur Herabsetzung der Filmbildungstemperatur, wie Diethylenglykolmonobutyletheracetat (Butyldiglykolacetat), |
| 60 - 66,4 | Gew.% Flammschutzmittel, wie Aluminiumhydroxid, |
| 0,5 | Gew.% Trocknungsverzögerer, wie 2-(2-Butoxyethoxy)ethanol (Butyldiglykol), |
| 10 - 20 | Gew.% Wasser zum Einarbeiten der Feststoffe und zur Einstellung der Viskosität, um den Dispersionskleber streichfähig zu halten. |

### Beispiel 2

| | |
|---|---|
| 10 - 50 | Gew.% einer 50%igen wäßrigen Klebrohstoff-Dispersion aus einem Acrylsäureester und Styrol, |
| 0,30-0,65 | Gew.% eines Verdickungs- und Verarbeitungsmittels, wie Methylhydroxyethylcellulose, |
| 0,3-0,7 | Gew.% einer 33-gewichtsprozentigen wäßrigen Natriumpolyphosphat-Lösung (Netzmittel), |
| 0,1-0,3 | Gew.% einer 30-gewichtsprozentigen wäßrigen Ammoniumpolyacrylat-Lösung (Suspensionsmittel), |
| 0,1-0,36 | Gew.% einer 30-gewichtsprozentigen wäßrigen Lösung eines Ammoniumsalzes einer Polyacrylsäure (Netz- und Dispergiermittel), |
| 0,1-0,2 | Gew.% Konservierungsmittel, wie Alkylammonium-, Isothiazin, Formolderivate, |
| 0,8-0,9 | Gew.% Entschäumer, wie hydrophobe Kieselsäure, |
| 55 - 65 | Gew.% Flammschutzmittel, wie Aluminiumhydroxid, |
| 15 - 21 | Gew.% Wasser zum Einarbeiten der Feststoffe und zur Einstellung der Viskosität, um den Dispersionskleber streichfähig zu halten. |

Erfindungsgemäße Dispersionskleber der voranstehenden Zusammensetzungen haben ausgezeichente Verarbeitungseigenschaften, eine hohe Anfangsklebekraft, adäquate Lagerzeiten und sehr gute flammhemmende Eigenschaften im Verbund mit unterschiedlichen Baumaterialien, die die Flammsicherheit von Verbunden erhöhen.

### Beispiel 3

Erfindungsgemäße Dispersionskleber nach den Beispielen 1 und 2 zeigen bei einer normalen Lagerung von mehr als 6 Monaten weder eine Gelierung, Viskositätsänderung noch Schimmelbildung und sind problemlos verarbeitbar.

Das gleiche gilt für einen halogenfreien Dispersionskleber nach der folgenden Tabelle:

**Tabelle**

| **Halogenfreier Dispersionskleber** | | |
|---|---|---|
| **Chem. Bezeichnung** | **Wirkungsweise** | **Gewichtsanteil in %** |
| Wäßrige Copolymerisat-Dispersion aus einem Acrylsäureester und Styrol | Kleber | 20,4 |
| Aluminiumhydroxid | Flammschutzmittel | 61,2 |
| Methyl- und/oder Hydroxyethylcellulose | Verdickungsmittel | 0,57 |
| Natriumpolyphosphat (33%ig in Wasser) | Netzmittel | 0,33 |
| Ammoniumpolyacrylat (30%ig in Wasser) | Suspensionsmittel | 0,11 |
| Ammoniumsalz einer Polyacrylsäure (30%ig in wasser) | Netz- und Dispergiermittel | 0,32 |
| Alkylammonium-, Isothiazin-Derivate | Konservierungsmittel | 0,19 |
| Hydrophobe Kieselsäure | Entschäumer | 0,82 |
| Wasser | Verdünner | 16,0 |

### Beispiel 4 (Vergleichsbeispiel)

Die Haltbarkeit der haftvermittelnden Oberflächenschicht der Formulierung, wie sie in der EP-A 0 109 663 beschrieben ist, beträgt maximal 4 Wochen. Danach ist dieses Produkt bei normaler Lagerung völlig geliert und nicht mehr verarbeitbar.

### Beispiel 5

Für die erfindungsgemäßen Dispersionskleber konnten gute Verklebungseigenschaften mit Wand- und Deckenverkleidungsmaterial (Baustoffen) festgestellt werden.

Eine haftvermittelnde Beschichtungsdispersion wie in der EP-A 0 109 663 beschrieben, ist für diese Anwendung nicht geeignet. Die Rezeptur ist derart aufgebaut, daß die Beschichtungsdispersion nicht als Kleber verwendbar ist, sondern nur als ein Produkt, das maschinell als eine haftvermittelnde Oberflächenschicht für Polystyrol-Hartschaum aufgebracht werden kann.

## Patentansprüche

1. Wäßriger Dispersionskleber aus einer Co- oder Terpolymerisat-Dispersion und einem Anteil an Flammschutzmittel auf der Basis von Bor- und/oder Aluminiumverbindungen, **dadurch gekennzeichnet, daß** der Feststoffanteil an Flammschutzmittel 40 bis 75 Gew.%, Feststoffzusätze aus einem Verarbeitungs- und Verdickungsmittel 0,3 bis 0,8 Gew.%, sowie einem Netzmittel 0,1 bis 0,26 Gew.% und einem Suspensionsmittel 0,03 bis 0,09 Gew.%, jeweils bezogen auf das Gesamtgewicht des Dispersionsklebers, betragen.

2. Wäßriger Dispersionskleber nach Anspruch 1, **dadurch gekennzeichnet, daß** die Dispersion ein Co- oder Terpolymer mit überwiegenden Vinylacrylat-Einheiten enthält.

3. Wäßriger Dispersionskleber nach Anspruch 1, **dadurch gekennzeichnet, daß** die Dispersion ein Copolymerisat aus einem Acrylsäureester und Styrol enthält.

4. Wäßriger Dispersionskleber nach Anspruch 2, **dadurch gekennzeichnet, daß** er 15 bis 50 Gew.%, insbesondere 20 bis 30 Gew.%, der co- oder terpolymeren Dispersion, 40 bis 75 Gew.% Flammschutzmittel und 5 bis 20 Gew.% an Zusätzen aus Verdickungs-, Netz-, Suspensions-, Konservierungsmittel, Entschäumer, Trocknungsverzögerer und Mittel zum Herabsetzen der Filmbildungstemperatur enthält.

5. Wäßriger Dispersionskleber nach Anspruch 2, **dadurch gekennzeichnet, daß** das Gewichtsverhältnis von co- oder terpolymerer Dispersion zu Flammschutzmittel 1:5 bis kleiner/gleich 1:0,8, insbesondere 1:2,5 bis 1:2 beträgt.

6. Wäßriger Dispersionskleber nach Anspruch 1, **dadurch gekennzeichnet, daß** das Verdickungs- und Verarbeitungsmittel Methyl- oder Hydroxyethylcellulose ist.

7. Wäßriger Dispersionskleber nach Anspruch 3, **dadurch gekennzeichnet, daß** er 10 bis 50 Gew.%, insbesondere 20 Gew.%, der Copolymerisat-Dispersion, 30 bis 62 Gew.% Flammschutzmittel und 15 bis 21 Gew.% an Zusätzen aus Verdickungs-, Netz-, Suspensions-, Dispergier-, Konservierungsmittel und Entschäumer enthält.

8. Wäßriger Dispersionskleber nach Anspruch 3, **dadurch gekennzeichnet, daß** das Gewichtsverhältnis von wäßriger Copolymerisat-Dispersion zu Flammschutzmittel 0,16:1 bis 1,67:1 beträgt.

9. Wäßriger Dispersionskleber nach Anspruch 1 oder 2, **dadurch gekennzeichnet, daß** das Suspensionsmittel Ammoniumpolyacrylat ist.

10. Wäßriger Dispersionskleber nach Anspruch 1, **dadurch gekennzeichnet, daß** das Netzmittel Natriumpolyphosphat ist.

11. Wäßriger Dispersionskleber nach Anspruch 1, **dadurch gekennzeichnet, daß** das Flammschutzmittel Aluminiumhydroxid ist.

12. Wäßriger Dispersionskleber nach Anspruch 1, **dadurch gekennzeichnet, daß** das Flammschutzmittel eine Mischung aus Aluminiumhydroxid und Zinkborat im Gewichtsverhältnis 3:1 bis 8:1 umfaßt.

13. Wäßriger Dispersionskleber nach Anspruch 2, **dadurch gekennzeichnet, daß** das Co- oder Terpolymer in wäßriger Dispersion vorliegt und als weitere Einheiten Vinylchlorid-, Ethylen-, Styrol-, Acrylsäureester-, Methacrylsäureester- und/oder Maleinsäureester-Einheiten enthält.

14. wäßriger Dispersionskleber nach Anspruch 13, **dadurch gekennzeichnet, daß** er ein Terpolymer aus Vinylacetat/Vinylchlorid-Einheiten oder Vinylacrylat/Ethylen/Vinylchlorid-Einheiten enthält.

15. Wäßriger Dispersionskleber nach Anspruch 4, **dadurch gekennzeichnet, daß** 0,1 bis 0,2 Gew.% Konservierungsmittel, 0,7 bis 0,8 Gew.% Entschäumer, 0,9 bis 1,0 Gew.% Mittel zur Herabsetzung der Filmbildungstemperatur und 0,5 Gew.% Trocknungsverzögerer enthalten sind.

16. Wäßriger Dispersionskleber nach Anspruch 4, **dadurch gekennzeichnet, daß** der Wasseranteil 5 bis 20 Gew.%, insbesondere 16,7 Gew.% beträgt.

17. Wäßriger Dispersionskleber nach Anspruch 15, **dadurch gekennzeichnet, daß** er 21,4 Gew.% des Co- oder Terpolymerisats, 58 Gew.% Flammschutzmittel, 0,7 Gew.% Verdickungs-, 0,7 Gew.% Suspensions- und 0,2 Gew.% Konservierungsmittel, 0,7 Gew.% Netzmittel, 0,8 Gew.% Entschäumer, 1,0 Gew.% Mittel zum Herabsetzen der Filmbildungstemperatur, 0,5 Gew.% Trocknungsverzögerer und als Rest Wasser enthält.

18. Wäßriger Dispersionskleber nach Anspruch 7, **dadurch gekennzeichnet, daß** er bis zu 0,2 Gew.% Konservierungsmittel, bis zu 0,9 Gew.% Entschäumer, bis zu 0,80 Gew.% Netz- und Dispergiermittel, bis zu 0,6 Gew.% Verdickungsmittel und bis zu 20 Gew.% Wasser als Verdünner enthält.

19. Wäßriger Dispersionskleber nach Anspruch 4, **dadurch gekennzeichnet, daß** die Konservierungsmittel Alkylammoniumoder Isothiazin-Derivate sind.

20. Wäßriger Dispersionskleber nach Anspruch 4, **dadurch gekennzeichnet, daß** der Entschäumer aus hydrophober Kieselsäure besteht.

## Claims

1. An aqueous dispersion adhesive comprising a co- or terpolymer dispersion and a content of flameproofing agent based on compounds of boron and/or aluminum, **characterized in that** the fraction of flameproofing agent solids is 40 to 75 % by weight and the solids added are 0.3 to 0.8 % by weight for a processing and thickening agent, 0.1 to 0.26 % by weight for a wetting agent and 0.03 to 0.09 % by weight for a suspending agent, in each case based on the total weight of the dispersion adhesive.

2. An aqueous dispersion adhesive as claimed in claim 1, **characterized in that** the dispersion comprises a co- or terpolymer having predominantly vinyl acrylate units.

3. An aqueous dispersion adhesive as claimed in claim 1, **characterized in that** the dispersion comprises a copolymer of an acrylic acid ester and styrene.

4. An aqueous dispersion adhesive as claimed in claim 2, **characterized in that** it comprises 15 to 50 % by weight, in particular 20 to 30 % by weight, of the co- or terpolymeric dispersion, 40 to 75 % by weight of flameproofing agent and 5 to 20 % by weight of additions of thickening agent, wetting agent, suspending agent, preservative, foam suppressant, drying retardant and agent for reducing the film formation temperature.

5. An aqueous dispersion adhesive as claimed in claim 2, **characterized in that** the weight ratio of co- or terpolymeric dispersion to flameproofing agent is from 1:5 to less than/equal to 1:0.8, in particular 1:2.5 to 1:2.

6. An aqueous dispersion adhesive as claimed in claim 1, **characterized in that** the thickening and processing agent is methyl- or hydroxyethylcellulose.

7. An aqueous dispersion adhesive as claimed in claim 3, **characterized in that** it comprises 10 to 50 % by weight, in particular 20 % by weight, of the copolymer dispersion, 30 to 62 % by weight of flameproofing agent and 15 to 21 % by weight of additions of thickening agent, wetting agent, suspending agent, dispersing agent, preservative and foam suppressant.

8. An aqueous dispersion adhesive as claimed in claim 3, **characterized in that** the weight ratio of aqueous copolymer dispersion to flameproofing agent is from 0.16:1 to 1.67:1.

9. An aqueous dispersion adhesive as claimed in claim 1 or 2, **characterized in that** the suspending agent is ammonium polyacrylate.

10. An aqueous dispersion adhesive as claimed in claim 1, **characterized in that** the wetting agent is sodium polyphosphate.

11. An aqueous dispersion adhesive as claimed in claim 1, **characterized in that** the flameproofing agent is aluminum hydroxide.

12. An aqueous dispersion adhesive as claimed in claim 1, **characterized in that** the flameproofing agent comprises a mixture of aluminum hydroxide and zinc borate in a weight ratio of 3:1 to 8:1.

13. An aqueous dispersion adhesive as claimed in claim 2, **characterized in that** the co- or terpolymer is present in aqueous dispersion and comprises vinyl chloride, ethylene, styrene, acrylic acid ester, methacrylic acid ester and/or maleic acid ester units as further units.

14. An aqueous dispersion adhesive as claimed in claim 13, **characterized in that** it comprises a terpolymer of vinyl acetate/vinyl chloride units or vinyl acrylate/ethylene/vinyl chloride units.

15. An aqueous dispersion adhesive as claimed in claim 4, **characterized in that** it comprises 0.1 to 0.2 % by weight of preservative, 0.7 to 0.8 % by weight of foam suppressant, 0.9 to 1.0 % by weight of agent for reducing the film formation temperature and 0.5 % by weight of drying retardant.

16. An aqueous dispersion adhesive as claimed in claim 4, **characterized in that** the water content is 5 to 20 % by weight, in particular 16.7 % by weight.

17. An aqueous dispersion adhesive as claimed in claim 15, **characterized in that** it comprises 21.4 % by weight of the co- or terpolymer, 58 % by weight of flameproofing agent, 0.7 % by weight of thickener, 0.7 % by weight of suspending agent, 0.2 % by weight of preservative, 0.7 % by weight of wetting agent, 0.8 % by weight of foam suppressant, 1.0 % by weight of agent for reducing the film formation temperature, 0.5 % by weight of drying retardant and water as the remainder.

18. An aqueous dispersion adhesive as claimed in claim 7, **characterized in that** it comprises up to 0.2 % by weight of preservative, up to 0.9 % by weight of foam suppressant, up to 0.80 % by weight of wetting and dispersing agent, up to 0.6 % by weight of thickener and up to 20 % by weight of water, as a diluent.

19. An aqueous dispersion adhesive as claimed in claim 4, **characterized in that** the preservative is an alkylammonium or isothiazine derivative.

20. An aqueous dispersion adhesive as claimed in claim 4, **characterized in that** the foam suppressant comprises hydrophobic silicic acid.

## Revendications

1. Colle à dispersion aqueuse constituée d'une dispersion d'un copolymérisat ou terpolymérisat et d'un pourcentage d'ignifugeant à base de composés de bore et/ou d'aluminium, **caractérisée en ce que** le pourcentage de solides de l'ignifugeant atteint 40 à 75 % en poids, le pourcentage des additifs solides constitués d'un agent de transformation et d'un épaississant 0,3 à 0,8 % en poids ainsi que d'un agent mouillant 0,1 à 0,26 % en poids et d'un agent de suspension 0,03 à 0,09 % en poids respectivement, par rapport au poids total de la colle à dispersion.

2. Colle à dispersion aqueuse selon la revendication 1, **caractérisée en ce que** la dispersion contient un copolymère ou terpolymère ayant des unités d'acrylate de vinyle prépondérantes.

3. Colle à dispersion aqueuse selon la revendication 1, **caractérisée en ce que** la dispersion contient un copolymérisat d'un ester d'acide acrylique et de styrène.

4. Colle à dispersion aqueuse selon la revendication 2, **caractérisée en ce qu'**elle contient 15 à 50 % en poids, en particulier 20 à 30 % en poids de la dispersion copolymère ou terpolymère, 40 à 75 % en poids d'ignifugeant et 5 à 20 % en poids d'additifs constitués d'épaississant, d'agent mouillant, d'agent de suspension, de conservateur, d'agent antimoussant, de retardateur de séchage et d'agent destiné à abaisser la température de formation du film.

5. Colle à dispersion aqueuse selon la revendication 2, **caractérisée en ce que** le rapport en poids de la dispersion copolymère ou terpolymère sur l'ignifugeant est de 1 : 5 jusqu'à être inférieur/égal à 1 : 0,8, en particulier 1 : 2,5 à 1 : 2.

6. Colle à dispersion aqueuse selon la revendication 1, **caractérisée en ce que** l'épaississant ou l'agent de transformation est la méthylcellulose ou l'hydroxyéthylcellulose.

7. Colle à dispersion aqueuse selon la revendication 3, **caractérisée en ce qu'**elle contient 10 à 50 % en poids, en particulier 20 % en poids de la dispersion de copolymérisat, 30 à 62 % en poids d'ignifugeant et 15 à 21 % en poids d'additifs constitués d'épaississant, d'agent mouillant, d'agent de suspension, d'agent de dispersion, de conservateur et d'agent antimoussant.

8. Colle à dispersion aqueuse selon la revendication 3, **caractérisée en ce que** le rapport en poids de la dispersion de copolymérisat aqueuse sur l'ignifugeant est de 0,16 : 1 à 1,67 : 1.

9. Colle à dispersion aqueuse selon la revendication 1 ou 2, **caractérisée en ce que** l'agent de suspension est le polyacrylate d'ammonium.

10. Colle à dispersion aqueuse selon la revendication 1, **caractérisée en ce que** l'agent mouillant est le polyphosphate de sodium.

11. Colle à dispersion aqueuse selon la revendication 1, **caractérisée en ce que** l'ignifugeant est l'hydroxyde d'aluminium.

12. Colle à dispersion aqueuse selon la revendication 1, **caractérisée en ce que** l'ignifugeant comprend un mélange d'hydroxyde d'aluminium et de borate de zinc dans un rapport en poids de 3 : 1 à 8 : 1.

13. Colle à dispersion aqueuse selon la revendication 2, **caractérisée en ce que** le copolymère ou terpolymère se présente en dispersion aqueuse et contient comme autres unités des unités de chlorure de vinyle, d'éthylène, de styrène, d'ester d'acide acrylique, d'ester d'acide méthacrylique et/ou d'ester d'acide maléique.

14. Colle à dispersion aqueuse selon la revendication 13, **caractérisée en ce qu'**elle contient un terpolymère composé d'unités d'acétate de vinyle / chlorure de vinyle ou d'unités d'acrylate de vinyle / éthylène / chlorure de vinyle.

15. Colle à dispersion aqueuse selon la revendication 4, **caractérisée en ce qu'**elle contient 0,1 à 0,2 % en poids de conservateur, 0,7 à 0,8 % en poids d'agent antimoussant, 0,9 à 1,0 % en poids d'agent destiné à abaisser la température de formation du film et 0,5 % en poids de retardateur de séchage.

16. Colle à dispersion aqueuse selon la revendication 4, **caractérisée en ce que** le pourcentage d'eau atteint 5 à 20 % en poids, en particulier 16,7 % en poids.

17. Colle à dispersion aqueuse selon la revendication 15, **caractérisée en ce qu'**elle contient 21,4 % en poids du copolymérisat ou terpolymérisat, 58 % en poids d'ignifugeant, 0,7 % en poids d'épaississant, 0,7 % en poids d'agent de suspension et 0,2 % en poids de conservateur, 0,7 % en poids d'agent mouillant, 0,8 % en poids d'agent antimoussant, 1,0 % en poids d'agent destiné à abaisser la température de formation du film, 0,5 % en poids de retardateur de séchage et le reste d'eau.

18. Colle à dispersion aqueuse selon la revendication 7, **caractérisée en ce qu'**elle contient jusqu'à 0,2 % en poids de conservateur, jusqu'à 0,9 % en poids d'agent antimoussant, jusqu'à 0,80 % en poids d'agent mouillant et de dispersion, jusqu'à 0,6 % en poids d'épaississant et jusqu'à 20 % en poids d'eau à titre de diluant.

19. Colle à dispersion aqueuse selon la revendication 4, **caractérisée en ce que** les conservateurs sont des dérivés d'alkylammonium ou d'isothiazine.

20. Colle à dispersion aqueuse selon la revendication 4, **caractérisée en ce que** l'agent antimoussant est constitué d'acide silicique hydrophobe.
